# EUROPEAN PATENT SPECIFICATION

(11) **EP 4 418 434 B1**
(45) Date of publication and mention of the grant of the patent: **19.11.2025**
(21) Application number: 23864117.9
(22) Date of filing: 25.08.2023
(51) Int. Cl.: H01M 50/342, H01M 50/358, H01M 50/204, H01M 50/249, H01M 50/383, H01M 50/211, H01M 50/262, H01M 50/271, H01M 50/273, H01M 50/367

(54) **BATTERY MODULE, AND BATTERY PACK AND VEHICLE INCLUDING SAME**
BATTERIEMODUL UND BATTERIEPACK SOWIE FAHRZEUG DAMIT
MODULE DE BATTERIE, BLOC-BATTERIE ET VÉHICULE LE COMPRENANT

(30) Priority: 26.12.2022 KR 20220185087; 31.03.2023 KR 20230043173
(43) Date of publication of application: 21.08.2024
(73) Proprietor: LG ENERGY SOLUTION, LTD., Seoul 07335 (KR)
(72) Inventor: JANG, Sung-Hwan, Daejeon 34122 (KR); KIM, Kwang-Mo, Daejeon 34122 (KR); SEONG, Jun-Yeob, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2023/012656
(87) International publication number: WO 2024/143754

(56) References cited:
- WO-A1-2022/006892
- CN-U- 216 488 307
- KR-A- 20140 130 575
- KR-A- 20210 077 278
- KR-A- 20220 105 063
- KR-A- 20220 120 001
- KR-A- 20220 120 001
- KR-B1- 102 280 326
- KR-B1- 102 280 326

## Description

### TECHNICAL FIELD

The present disclosure relates to a battery module, and a battery pack and a vehicle including the same, and more specifically, relates to a battery module having a plurality of battery cells capable of being charged and discharged, and a battery pack and a vehicle including the battery module.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is the most fundamental secondary battery, is approximately 2.5V to 4.2V.

Recently, secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series or parallel and reconnecting multiple battery modules configured above in series or parallel, has been widely used.

However, as disclosed in Korean Patent Publication No. 10-2022-0052183, since existing battery modules are manufactured by storing multiple battery cells that are densely stacked in a sealed metal case, it is difficult to discharge, when venting gas is generated in any one battery cell inside the battery module, the venting gas to the outside of the battery module, and heat energy is accumulated inside the battery module, causing a serial thermal runaway and ignition of other battery cells within a short period of time.

In addition, these existing battery modules are unable to discharge high-temperature and high-pressure venting gas in an intended direction, thereby causing damage to other battery modules adjacent to the battery module in which thermal runaway occurs or serial thermal runaway thereof. Moreover, if the layout of the battery modules included in the battery pack is configured in a structure in which the HV (high-voltage) terminals of different battery modules face each other, the risk and damage of serial thermal runaway may be further amplified. Document KR 2022 0120001 A discloses a battery module comprising gas venting parts.

### DISCLOSURE

### Technical Problem

The present disclosure has been designed to solve the problems of the related art, and therefore the present disclosure is directed to providing a battery module that quickly discharges venting gas from a battery cell accommodated inside the battery module to the outside of the battery module, and a battery pack and a vehicle including the battery module.

The present disclosure also provides a battery module capable of controlling the discharge of the venting gas in an intended direction, and a battery pack and a vehicle including the battery module.

### Technical Solution

In one aspect of the present disclosure, there is provided a battery module that comprises: a plurality of battery cells capable of being charged and discharged; a module case having an inner space surrounded by a plurality of surfaces and an opening leading to the inner space, and configured to accommodate the plurality of battery cells in the inner space; and an end cover configured to cover the opening of the module case, wherein the module case includes an open portion provided on a first surface among the plurality of surfaces and configured to be opened by gas generated from a battery accommodated in the inner space and discharge the gas in a direction away from the end cover.

The module case further includes a vent hole configured in the form of a line or dotted line extending along the perimeter of the open portion and leading to the inner space.

In an embodiment, the module case may include: a case frame having the inner space and the opening; and a case cover configured to cover the outer surface of the case frame.

In an embodiment, the case frame may have a through-hole provided on the first surface to lead to the inner space, and the case cover may include the open portion provided in a portion of the case cover facing the through-hole.

In an embodiment, the case cover may be configured in the form of a sheet and to be attached to the case frame so as to surround at least two surfaces among the plurality of surfaces.

In an embodiment, the case cover may include: a cover portion including the open portion and configured to cover a first surface of the case frame; a first attachment portion extending from one end of the cover portion and attached to a second surface of the case frame adjacent to the first surface; and a second attachment portion extending from the other end of the cover portion and attached to a third surface of the case frame adjacent to the first surface.

In an embodiment, the case cover may be made of a flexible material.

In an embodiment, the case cover may have an attachment surface having an adhesive layer provided thereon and may be configured to be attached to the outer surface of the case frame using the attachment surface.

In an embodiment, the open portion may include: a lead portion configured to be separated from the case cover by pressure of the gas and open the through-hole; and a support having one end connected to the lead portion and the other end connected to a portion of the case cover to support the lead portion such that the lead portion separated from the case cover does not deviate from its position within a predetermined range.

In an embodiment, the lead portion may be configured to be divided into two or more parts by the pressure of the gas.

In an embodiment, the case frame may further include a blocking beam provided inside the through-hole and configured to block the open portion from entering the through-hole.

In an embodiment, the battery module may further include a terminal disposed on the end cover and electrically connected to the plurality of battery cells.

A battery pack according to another aspect of the present disclosure includes the battery module according to any one of the embodiments described above.

A vehicle according to another aspect of the present disclosure includes the battery module according to any one of the embodiments described above.

### Advantageous Effects

According to the present disclosure, a module case accommodating battery cells has an open portion provided on one surface of the module case and configured to be opened by venting gas of the battery cell, thereby preventing foreign substances from entering the battery module and quickly discharging the venting gas of the battery cell to the outside of the battery module. As a result, the heat energy accumulated inside the battery module may be minimized, thereby delaying the heat propagation time, preventing serial thermal runaway or ignition between the battery cells, explosion of the battery module, etc., and improving the safety of the battery module. In addition, the open portion is provided only on a specific surface among several surfaces of the module case and may discharge high-temperature and high-pressure venting gas generated from the battery cell in an intended direction, thereby preventing damage to other battery modules adjacent to the battery module and serial thermal runaway.

In particular, since the open portion is configured to discharge the venting gas of the battery cell in a direction away from an end cover where a terminal of the battery module is disposed, it is possible to prevent the electrical connection structure of the battery module from being damaged by the venting gas.

In addition, a through-hole may be provided in a case frame constituting the main body of the module case, and a case cover having the open portion may be attached to the outer surface of the case frame to cover or open the through-hole using the open portion, so the overall weight of the battery module can be reduced and the manufacturing process can be simplified.

In addition, since the case cover is attached to the case frame so as to surround at least two surfaces of the plurality of outer surfaces of the case frame, it is possible to prevent the entire case cover from being separated from the case frame due to venting gas pressure.

In addition, a blocking beam may be provided inside the through-hole of the case frame, thereby preventing the open portion of the case cover, which opens and closes the opening of the through-hole, from being ruptured by external pressure and being pushed into the through-hole.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery module according to an embodiment of the present disclosure.
FIG. 2 is an exploded perspective view illustrating the battery module shown in FIG. 1.
FIG. 3 is an enlarged view illustrating area A1 in FIG. 1.
FIG. 4 is an enlarged view illustrating area A2 in FIG. 3.
FIG. 5 is a cross-sectional view taken along line S1-S1' in FIG. 3.
FIG. 6 is a cross-sectional view illustrating the open state of the open portion shown in FIG. 3.
FIG. 7 is a diagram illustrating an open portion of a module case according to a first modified embodiment.
FIG. 8 is a diagram illustrating an open portion of a module case according to a second modified embodiment.
FIG. 9 is a diagram illustrating the open state of the open portion shown in FIG. 8.
FIG. 10 is a diagram illustrating an open portion of a module case according to a third modified embodiment.
FIG. 11 is a diagram illustrating the open state of the open portion shown in FIG. 10.
FIG. 12 is a diagram illustrating a case frame according to a modified embodiment.
FIG. 13 is a diagram illustrating a battery pack according to an embodiment of the present disclosure.
FIG. 14 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

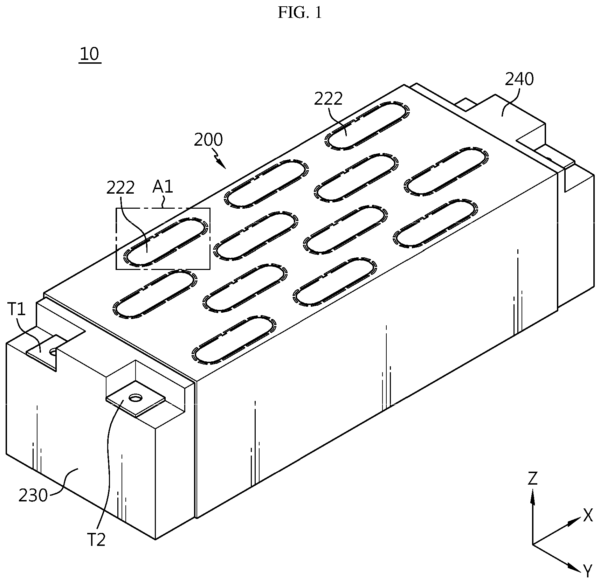

FIG. 1 is a perspective view illustrating a battery module 10 according to an embodiment of the present disclosure.

As shown in FIG. 1, the battery module 10 according to an embodiment of the present disclosure is configured to accommodate a plurality of battery cells therein. To this end, the battery module 10 includes a module case 200 and end covers 230 and 240.

Each of the battery cells accommodated in the battery module 10 is a basic secondary battery that serves as a unit of charging and discharging, and may be configured in various forms. For example, each battery cell may be configured as a pouch-type secondary battery, a cylindrical secondary battery, or a prismatic secondary battery.

The module case 200 has an inner space surrounded by a plurality of surfaces and an opening leading to the inner space, and is configured to accommodate the plurality of battery cells in the inner space.

The end covers 230 and 240 are coupled to the module case 200 accommodating the battery cells and are configured to airtightly cover the opening of the module case 200. Terminals T1 and T2 may be disposed on the outer surface of the end covers 230 and 240 so as to be electrically connected to the battery cells accommodated in the inner space.

In particular, at least one open portion 222 is provided on a first surface (e.g., an upper surface) among the plurality of surfaces of the module case 200. This open portion 222 is configured to be opened by gas generated from a battery accommodated in the inner space.

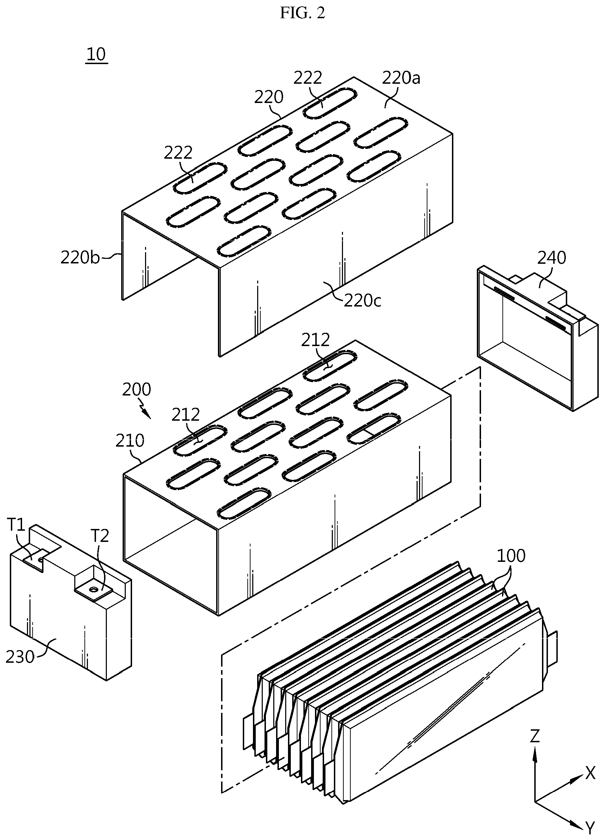

FIG. 2 is an exploded perspective view illustrating the battery module 10 shown in FIG. 1.

As shown in FIG. 2, the battery module 10 may include battery cells 100, a module case 200, a first end cover 230, and a second end cover 240. In this case, the "end cover" may also be referred to as an "end frame".

As mentioned above, the module case 200 has an inner space surrounded by a plurality of surfaces and an opening leading to the inner space, and accommodates the plurality of battery cells in the inner space.

In addition, the module case 200 includes at least one open portion 222 provided on a first surface (e.g., the upper surface) among a plurality of surfaces constituting the inner space of the module case 200. This open portion 222 is configured to be opened by gas generated from a battery accommodated in the inner space and discharge the gas in a direction (e.g., the Z-axis direction) away from the end covers 230 and 240.

In an embodiment, each of the plurality of surfaces of the module case 200 may be configured as a single metal layer.

In another embodiment, the at least first surface among the plurality of surfaces of the module case 200 may be configured as multiple layers. For example, the module case 200 may include a case frame 210 and a case cover 220. In this case, the "case cover" may also be referred to as a "covering member".

The case frame 210 may correspond to the main body of the module case 200 and may have an inner space for accommodating the battery cells and an opening leading to the inner space. For example, the case frame 210 may be configured in the form of a tube having an upper surface, a lower surface, a left side surface, and right side surface, and openings formed at the front and rear ends, respectively. The case frame 210 may be made of a metal material with rigidity and heat resistance.

At least one through-hole 212 leading to the inner space may be provided on the upper surface of the plurality of surfaces constituting the case frame 210.

The case cover 220 may be configured to cover the outer surface of the case frame 210. In particular, the case cover 220 may have the open portion 222 in a portion of the case cover 220 facing the through-hole 212.

In this case, the open portion 222 of the case cover 220 may be provided such that the number of open portions corresponds to the number of through-holes 212 of the case cover 220. In addition, the open portion 222 of the case cover 220 may be configured to be opened by venting gas from the battery cells accommodated in the inner space.

In an embodiment, the case cover 220 may be configured in the form of a sheet and may be attached to the case frame 210 so as to surround at least two of the plurality of surfaces of the case frame 210.

For example, the case cover 220 may include a cover portion 220a provided with the open portion 222 and covering the upper surface of the case frame 210, a first attachment portion 220b extending from one end of the cover portion 220a and attached to one side surface of the case frame 210 adjacent to the upper surface, and a second attachment portion 220c extending from the other end of the cover portion 220a and attached to the other side surface of the case frame 210 adjacent to the upper surface.

In addition, the case cover 220 may be made of a material with flexibility and high heat resistance. For example, the case cover 220 may be made of a material including one or more of stainless steel, mica, polyimide, aromatic polyamide, and fluoropolymer.

In addition, the case cover 220 may have an attachment surface attached to the outer surface of the case frame 210. The attachment surface of the case cover 220 may have an adhesive layer provided thereon. The case cover 220 may be attached to a plurality of surfaces, including the upper surface of the case frame 210, using the attachment surface provided with an adhesive layer.

Meanwhile, the battery cell 100 accommodated in the module case 200 described above corresponds to a basic secondary battery that is a unit of charge and discharge. This battery cell 100 may be configured as a pouch-shaped battery cell having electrode leads at both ends in the longitudinal direction (X-axis direction). In this case, the battery cells accommodated in the module case 200 may be accommodated in the module case 200 in a stacked state in one direction (Y-axis direction).

Depending on the embodiment, the battery cell 100 accommodated in the module case 200 may also be configured as a prismatic or cylindrical battery cell.

The first end cover 230 may be coupled to the front end of the case frame 210 and configured to airtightly cover the front opening of the case frame 210. In addition, terminals T1 and T2 electrically connected to the battery cells accommodated in the inner space of the module case 200 may be disposed on the outer surface of the first end cover 230. The first end cover 230 may be made of metal, synthetic resin, or a combination of metal and synthetic resin with rigidity and heat resistance.

The second end cover 240 may be coupled to the rear end of the case frame 210 and configured to airtightly cover the rear opening of the case frame 210. The second end cover 240 may be made of metal, synthetic resin, or a combination of metal and synthetic resin with rigidity and heat resistance.

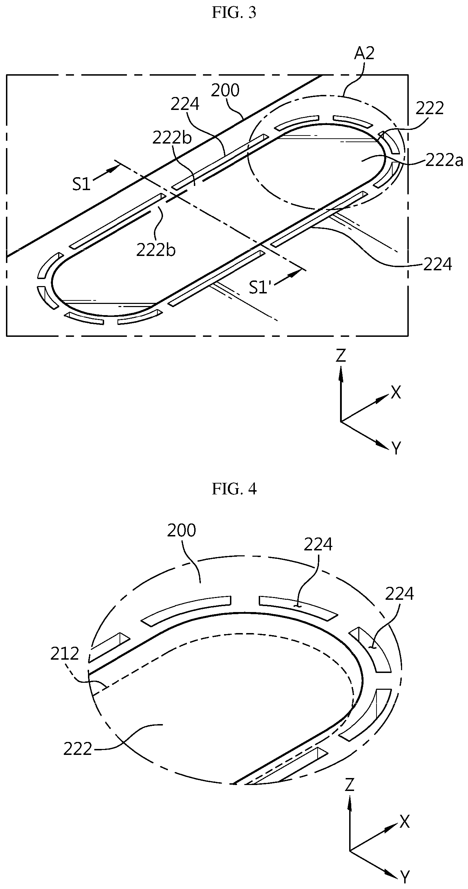

FIG. 3 is an enlarged view illustrating area A1 in FIG. 1.

As shown in FIG. 3, the open portion 222 of the module case 200 may include a lead portion 222a and at least one support 222b.

The lead portion 222a may function as a kind of lid that opens and closes the gas outlet of the module case 200. For example, if no gas is generated from the battery cell accommodated in the module case 200 or if the pressure of the gas is less than a predetermined threshold, the lead portion 222a may cover and close the through-hole 212 provided in the case frame 210 of the module case 200.

On the other hand, if gas is generated from the battery cell accommodated in the module case 200, the lead portion 222a may be separated from the module case 200 by the pressure of the gas, thereby opening the through-hole 212 of the case frame 210.

The support 222b may have one end connected to the lead portion 222a and the other end connected to a portion of the module case 200, excluding the lead portion 222a, thereby supporting the lead portion 222a such that the lead portion 222a separated from the module case 200 does not deviate from its position within a predetermined range.

The open portion 222 of the module case 200 may be provided on the upper surface of the module case 200 by forming a notch or cut line corresponding to the shape of the open portion 222.

The module case 200 has a vent hole 224 that is provided in the form of a line or dotted line extending along the perimeter of the open portion 222 and leads to the inner space of the module case 200.

FIG. 4 is an enlarged view illustrating area A2 in FIG. 3.

As shown in FIG. 4, the vent hole 224 is provided to extend in the form of a line or dotted line along the perimeter of the open portion 222 closing the through-hole 212 of the module case 200.

In the case where the module case 200 has a multi-layer structure including the case frame 210 and the case cover 220, the vent hole 224 may have a structure of passing through the case frame 210 and the case cover 220.

This vent hole 224 may quickly discharge the gas to the outside of the module case 200 even if the gas pressure inside the module case 200 does not reach a level capable of opening the open portion 222.

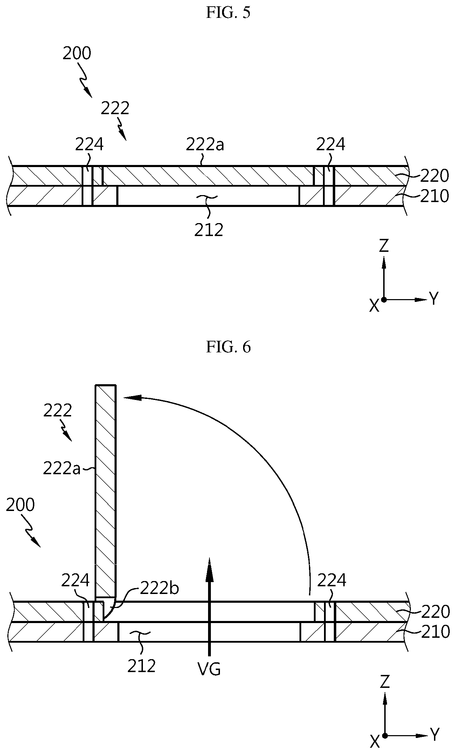

FIG. 5 is a cross-sectional view taken along line S1-S1' in FIG. 3.

As shown in FIG. 5, if no gas is generated from the battery cell inside the module case 200, the open portion 222 of the case cover 220 may cover and close the through-hole 212 of the case frame 210.

In this case, the lead portion 222a of the open portion 222 may have the same surface area as the through-hole 212 or may have a surface area greater than that of the through-hole 212.

If gas is generated from the battery cell inside the module case 200, but if the pressure of the gas does not reach a level capable of opening the open portion 222, the gas may be quickly discharged to the outside of the module case 200 through the vent hole 224.

FIG. 6 illustrates the open state of the open portion 222 shown in FIG. 5.

As shown in FIG. 6, if gas is generated from the battery cell inside the module case 200, reaching a predetermined pressure or more, the lead portion 222a of the open portion 222 may be separated from the module case 200 by the pressure of the gas, thereby opening the through-hole 212 of the case frame 210.

For reference, if the lead portion 312 is completely separated from the module case 200 due to the gas pressure, fragments of the separated lead portion may cause various problems inside the battery pack. To prevent this, the support 222b of the open portion 222 may support the lead portion 222a such that the lead portion 312 does not deviate from its position within a predetermined range.

As described above, since the through-hole is provided in the case frame 210 constituting the main body of the module case 200, and since the case cover 220 having the open portion 222 is attached to the outer surface of the case frame 210 to cover or open the through-hole 212 using the open portion 222, the overall weight of the battery module may be reduced and the manufacturing process may be simplified.

In addition, since the case cover 220 is attached to the case frame 210 so as to surround at least two surfaces of the plurality of outer surfaces of the case frame 210, it is possible to prevent the entire case cover from being separated from the case frame due to the venting gas pressure.

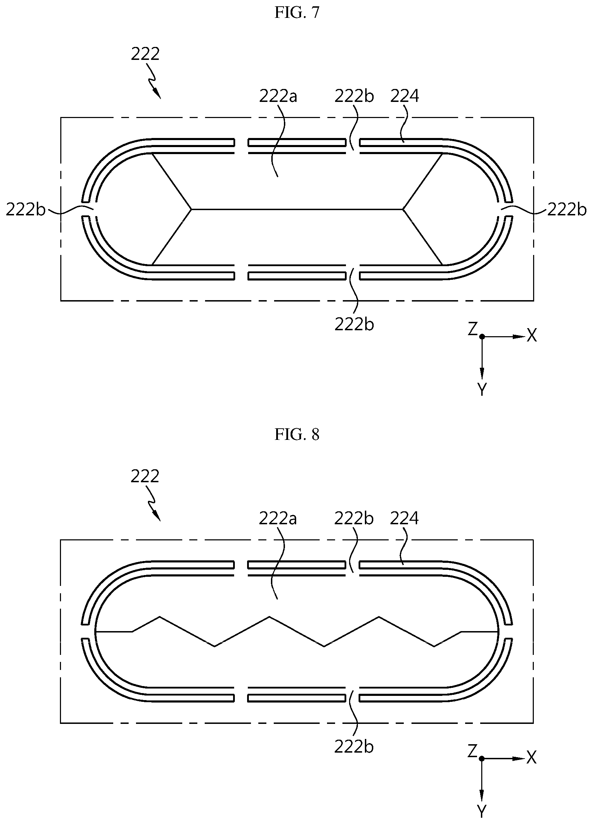

FIG. 7 is a diagram illustrating an open portion of a module case according to a first modified embodiment.

FIG. 8 is a diagram illustrating an open portion of a module case according to a second modified embodiment.

As shown in FIGS. 7 and 8, an open portion 222 of a module case 200 according to the first and second modified embodiments may include a lead portion 222a and a support 222b. In particular, the lead portion 222a of the open portion 222 may be configured to be divided into two or more parts by gas pressure.

That is, as shown in FIG. 7, the lead portion 222a of the open portion 222 may be configured to be separated from the module case 200 while being divided into four parts by a predetermined gas pressure or above.

A separate vent hole 224 may be provided in the form of a line or dotted line along the perimeter of the open portion 222. The vent hole 224 may discharge gas below the predetermined pressure.

In addition, as shown in FIG. 8, the lead portion 222a of the open portion 222 may be configured to be separated from the module case 200 while being divided into four parts by a predetermined gas pressure or above.

A separate vent hole 224 may be provided in the form of a line or dotted line along the perimeter of the open portion 222. The vent hole 224 may discharge gas below the predetermined pressure.

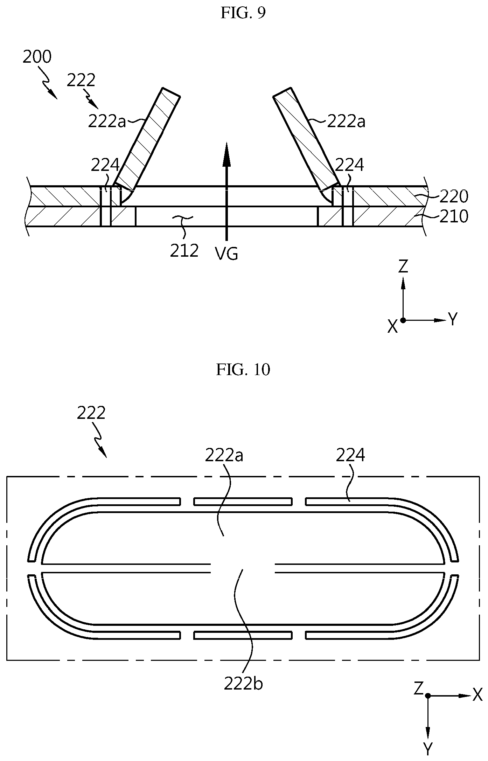

FIG. 9 is a diagram illustrating the open state of the open portion shown in FIG. 8.

As shown in FIG. 9, if gas is generated, reaching a predetermined pressure or above, from the battery cell inside the module case 200, the lead portion 222a of the open portion 222 may be divided into two parts and separated from the module case 200 by the gas pressure, thereby opening the through-hole 212 of the case frame 210. In this case, the lead portion 222a may open the through-hole 212, starting from the center thereof.

FIG. 10 is a diagram illustrating an open portion of a module case according to a third modified embodiment.

As shown in FIG. 10, an open portion 222 of a module case 200 according to a third modified embodiment may include a lead portion 222a and a support 222b. In particular, the lead portion 222a of the open portion 222 may be configured to be divided into two parts by gas pressure.

A separate vent hole 224 may be provided in the form of a line or dotted line along the perimeter of the open portion 222. The vent hole 224 may discharge gas below the predetermined pressure.

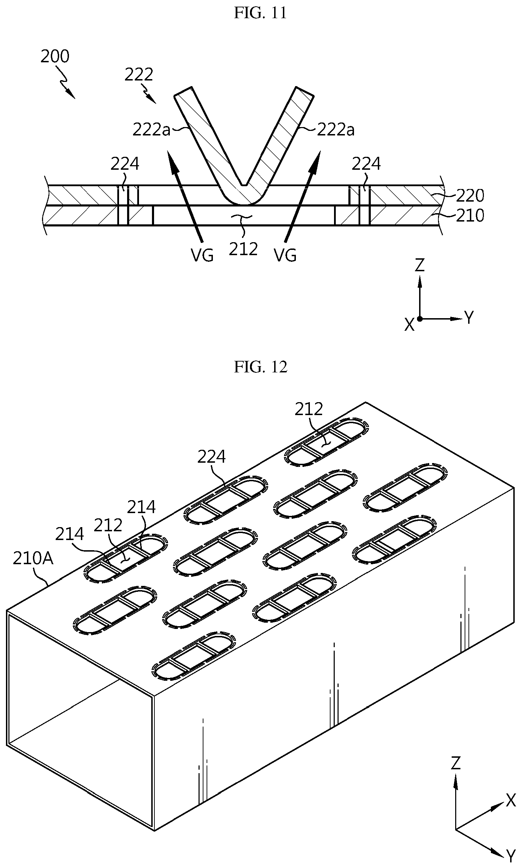

FIG. 11 is a diagram illustrating the open state of the open portion shown in FIG. 10.

As shown in FIG. 11, if gas is generated, reaching a predetermined pressure or above, from the battery cell inside the module case 200, the lead portion 222a of the open portion 222 may be divided into two parts and separated from the module case 200 by the gas pressure, thereby opening the through-hole 212 of the case frame 210. In this case, the lead portion 222a may open the through-hole 212, starting from the edges thereof. In this case, the gas or flame discharged through the through-hole 212 may be guided in both side directions (the ±Y-axis direction).

FIG. 12 is a diagram illustrating a case frame 210A according to a modified embodiment.

As shown in FIG. 12, a case frame 210A according to a modified embodiment may have an inner space surrounded by a plurality of outer surfaces and may be configured to accommodate at least one battery cell in the inner space. For example, the case frame 210A may be configured in the form of a tube having an upper surface, a lower surface, a left side surface, and right side surface, and openings formed at the front and rear ends, respectively. The case frame 210A may be made of a metal material with rigidity and heat resistance.

In addition, at least one through-hole 212 leading to the inner space of the case frame 210A may be provided on the upper surface of the plurality of outer surfaces constituting the case frame 210A.

In particular, the case frame 210A may have a blocking beam 214 provided inside the through-hole 212. This blocking beam 214 may be configured to block the open portion 222 of the case cover 220 from being ruptured by external pressure and entering the through-hole 212.

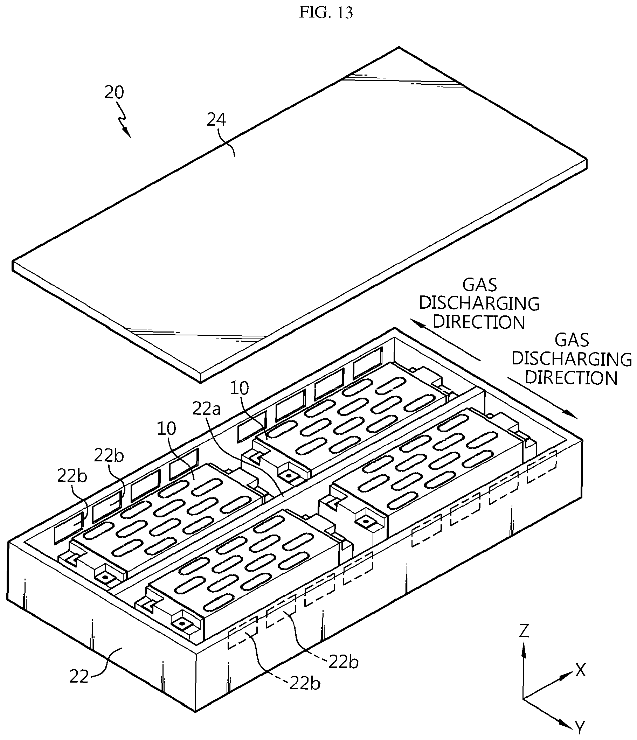

FIG. 13 is a diagram illustrating a battery pack 20 according to an embodiment of the present disclosure.

As shown in FIG. 13, a battery pack 20 according to an embodiment of the present disclosure may include the battery module 10 according to the various embodiments described above. In addition, the battery pack 20 may further include a pack case accommodating one or more battery modules 10.

The pack case may include a pack tray 22 that has an accommodation space for accommodating a plurality of battery modules and a pack lid 24 that covers the top opening of the pack tray 22.

The pack tray 22 may include cross beams 22a that divide the accommodation space. In addition, a gas channel 22b for discharging venting gas generated from each battery module 10 may be provided on the wall of the pack tray 22 forming the accommodation space. For example, the gas channel 22b may be provided such that the venting gas of the battery module located on the left side of the cross beam 22a is discharged in the left direction and such that the venting gas of the battery module located on the right side thereof is discharged in the right direction.

In addition, the battery pack 20 may further include a variety of electrical equipment (not shown) that controls the charging and discharging operation of the battery module 10 accommodated in the pack case or the battery cells included in the battery module 10 or monitors SOC (state-of-charge), SOH (state-of-health), and the like. The electrical equipment may be accommodated in the pack case together with the battery module 10.

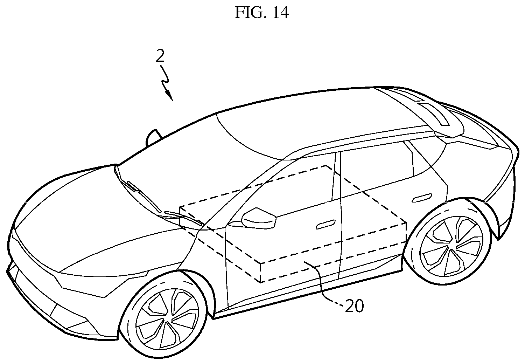

FIG. 14 is a diagram illustrating a vehicle 2 according to an embodiment of the present disclosure.

As shown in FIG. 14, a vehicle 2 according to an embodiment of the present disclosure may include the battery module 10 according to the various embodiments described above. For example, the vehicle 2 may include a battery pack 20 containing one or more battery modules 10. In this case, the battery module 10 or the battery pack 20 including the same may provide electrical energy required for various operations of the vehicle 2.

For reference, the battery module 10 according to the present disclosure may be applied to various electric devices or electric systems in addition to vehicles, and may also be applied to ESSs (Energy Storage Systems).

As described above, according to the present disclosure, a module case accommodating battery cells may have an open portion provided on one surface of the module case and configured to be opened by venting gas of the battery cell, thereby preventing foreign substances from entering the battery module and quickly discharging the venting gas of the battery cell to the outside of the battery module. As a result, the heat energy accumulated inside the battery module may be minimized, thereby delaying the heat propagation time, preventing serial thermal runaway or ignition between the battery cells, explosion of the battery module, etc., and improving the safety of the battery module.

In addition, the open portion may be provided only on a specific surface among the several surfaces of the module case and may discharge high-temperature and high-pressure venting gas generated from the battery cell in an intended direction, thereby preventing damage to other battery modules adjacent to the battery module and serial thermal runaway.

In particular, since the open portion is configured to discharge the venting gas of the battery cell in a direction away from an end cover where a terminal of the battery module is disposed, it is possible to prevent the electrical connection structure of the battery module from being damaged by the venting gas.

In addition, since a through-hole is provided in a case frame constituting the main body of the module case, and since a case cover having the open portion is attached to the outer surface of the case frame to cover or open the through-hole using the open portion, it is possible to reduce the overall weight of the battery module and simplify the manufacturing process.

In addition, since the case cover is attached to the case frame so as to surround at least two surfaces of the plurality of outer surfaces of the case frame, it is possible to prevent the entire case cover from being separated from the case frame due to venting gas pressure.

In addition, a blocking beam may be provided inside the through-hole of the case frame, thereby preventing the open portion of the case cover, which opens and closes the opening of the through-hole, from being ruptured by external pressure and being pushed into the through-hole.

Furthermore, it goes without saying that the embodiments according to the present disclosure are able to solve various technical problems other than those mentioned in this specification in the relevant technical field as well as related technical fields.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims.

## Claims

1. A battery module (10) comprising:
a plurality of battery cells (100) capable of being charged and discharged;
a module case (200) having an inner space surrounded by a plurality of surfaces and an opening leading to the inner space, and configured to accommodate the plurality of battery cells (100) in the inner space; and
an end cover (230, 240) configured to cover the opening of the module case (200),
wherein the module case (200) comprises an open portion (222) provided on a first surface among the plurality of surfaces and configured to be opened by gas generated from a battery cell accommodated in the inner space and discharge the gas in a direction away from the end cover (230, 240),
wherein the module case (200) further comprises a vent hole (224) configured in the form of a line or dotted line extending along the perimeter of the open portion (222) and leading to the inner space.

2. The battery module (10) according to claim 1,
wherein the module case (200) comprises:
a case frame (210) having the inner space and the opening (230, 240); and
a case cover (220) configured to cover an outer surface of the case frame (210).

3. The battery module (10) according to claim 2,
wherein the case frame (210) has a through-hole (212) provided on the first surface to lead to the inner space, and
wherein the case cover (220) comprises the open portion (222) provided in a portion of the case cover (220) facing the through-hole (212).

4. The battery module (10) according to claim 3,
wherein the case cover (220) is configured in the form of a sheet and is configured to be attached to the case frame (210) so as to surround at least two surfaces among the plurality of surfaces.

5. The battery module (10) according to claim 3,
wherein the case cover (220) comprises:
a cover portion (220) comprising the open portion (222) and configured to cover a first surface of the case frame (210);
a first attachment portion (220b) extending from one end of the cover portion (220a) and attached to a second surface of the case frame adjacent to the first surface; and
a second attachment portion extending from the other end of the cover portion and attached to a third surface of the case frame (210) adjacent to the first surface.

6. The battery module (10) according to claim 3,
wherein the case cover (220) is made of a flexible material.

7. The battery module (10) according to claim 3,
wherein the case cover (220) has an attachment surface having an adhesive layer provided thereon and is configured to be attached to the outer surface of the case frame (210) using the attachment surface.

8. The battery module (10) according to claim 3,
wherein the open portion (222) comprises:
a lead portion (222a) configured to be separated from the case cover (220) by pressure of the gas and open the through hole (212); and
a support (222b) having one end connected to the lead portion (222a) and the other end connected to a portion of the case cover (220) to support the lead portion (222a) such that the lead portion (222a) separated from the case cover (220) does not deviate from its position within a predetermined range.

9. The battery module (10) according to claim 8,
wherein the lead portion (222a) is configured to be divided into two or more parts by the pressure of the gas.

10. The battery module (10) according to claim 3,
wherein the case frame (210) further comprises a blocking beam (214) provided inside the through-hole (212) and configured to block the open portion (222) from entering the through-hole (212).

11. The battery module (10) according to claim 1,
further comprising a terminal (T1, T2) disposed on the end cover (230, 240) and electrically connected to the plurality of battery cells (100).

12. A battery pack (20) comprising the battery module (10) according to any one of claims 1 to 11.

13. A vehicle (2) comprising the battery module (10) according to any one of claims 1 to 11.

## Patentansprüche

1. Batteriemodul (10), umfassend:
eine Mehrzahl von Batteriezellen (100), welche in der Lage sind, geladen und entladen zu werden;
ein Modulgehäuse (200), welches einen inneren Raum, welcher von einer Mehrzahl von Flächen umgeben ist, und eine Öffnung aufweist, welche zu dem inneren Raum führt, und dazu eingerichtet ist, die Mehrzahl von Batteriezellen (100) in dem inneren Raum aufzunehmen; und
eine Endabdeckung (230, 240), welche dazu eingerichtet ist, die Öffnung des Modulgehäuses (200) zu bedecken,
wobei das Modulgehäuse (200) einen offenen Abschnitt (222) umfasst, welcher an einer ersten Fläche unter der Mehrzahl von Flächen bereitgestellt ist und dazu eingerichtet ist, durch Gas geöffnet zu werden, welches von einer Batteriezelle generiert wird, welche in dem inneren Raum aufgenommen ist, und das Gas in eine Richtung weg von der Endabdeckung (230, 240) abzuführen,
wobei das Modulgehäuse (200) ferner ein Lüftungsloch (224) umfasst, welches in der Form einer Linie oder einer gestrichelten Linie eingerichtet ist, welche sich entlang des Umfangs des offenen Abschnitts (222) erstreckt und zu dem inneren Raum führt.

2. Batteriemodul (10), nach Anspruch 1,
wobei das Modulgehäuse (200) umfasst:
einen Gehäuserahmen (210), welcher den inneren Raum und die Öffnung (230, 240) aufweist; und
eine Gehäuseabdeckung (220), welche dazu eingerichtet ist, eine äußere Fläche des Gehäuserahmens (210) zu bedecken.

3. Batteriemodul (10), nach Anspruch 2,
wobei der Gehäuserahmen (210) ein Durchgangsloch (212) aufweist, welches an der ersten Fläche bereitgestellt ist, um zu dem inneren Raum zu führen, und
wobei die Gehäuseabdeckung (220) den offenen Abschnitt (222) umfasst, welcher in einem Abschnitt der Gehäuseabdeckung (220) bereitgestellt ist, welcher dem Durchgangsloch (212) zugewandt ist.

4. Batteriemodul (10), nach Anspruch 3,
wobei die Gehäuseabdeckung (220) in der Form einer Bahn eingerichtet ist und dazu eingerichtet ist, an den Gehäuserahmen (210) angebracht zu sein, um wenigstens zwei Flächen unter der Mehrzahl von Flächen zu umgeben.

5. Batteriemodul (10), nach Anspruch 3,
wobei die Gehäuseabdeckung (220) umfasst:
einen Abdeckungsabschnitt (220), welcher den offenen Abschnitt (222) umfasst und dazu eingerichtet ist, eine erste Fläche des Gehäuserahmens (210) zu bedecken;
einen ersten Anbringungsabschnitt (220b), welcher sich von einem Ende des Abdeckungsabschnitts (220a) erstreckt und an einer zweiten Fläche des Gehäuserahmens angebracht ist, welche benachbart zu der ersten Fläche ist; und
einen zweiten Anbringungsabschnitt, welcher sich von dem anderen Ende des Abdeckungsabschnitts erstreckt und an einer dritten Fläche des Gehäuserahmens (210) angebracht ist, welche benachbart zu der ersten Fläche ist.

6. Batteriemodul (10), nach Anspruch 3,
wobei die Gehäuseabdeckung (220) aus einem flexiblen Material hergestellt ist.

7. Batteriemodul (10), nach Anspruch 3,
wobei die Gehäuseabdeckung (220) eine Anbringungsfläche aufweist, welche eine haftende Schicht aufweist, welche darauf bereitgestellt ist, und dazu eingerichtet ist, an der äußeren Fläche des Gehäuserahmens (210) unter Verwendung der Anbringungsfläche angebracht zu sein.

8. Batteriemodul (10), nach Anspruch 3,
wobei der offene Abschnitt (222) umfasst:
einen Leitungsabschnitt (222a), welcher dazu eingerichtet ist, von der Gehäuseabdeckung (220) durch einen Druck des Gases separiert zu sein und das Durchgangsloch (212) zu öffnen; und
eine Halterung (222b), welche ein Ende, welches mit dem ersten Leitungsabschnitt (222a) verbunden ist, und das andere Ende aufweist, welches mit einem Abschnitt der Gehäuseabdeckung (220) verbunden ist, um den Leitungsabschnitt (222a) derart zu haltern, dass der Leitungsabschnitt (222a), welcher separiert von der Gehäuseabdeckung (220) ist, innerhalb eines vorbestimmten Bereichs nicht von seiner Position abweicht.

9. Batteriemodul (10), nach Anspruch 8,
wobei der Leitungsabschnitt (222a) dazu eingerichtet ist, durch den Druck des Gases in zwei oder mehr Teile geteilt zu werden.

10. Batteriemodul (10), nach Anspruch 3,
wobei der Gehäuserahmen (210) ferner einen Blockierbalken (214) umfasst, welcher im Inneren des Durchgangslochs (212) bereitgestellt ist und dazu eingerichtet ist, den offenen Abschnitt (222) daran zu blockieren, in das Durchgangsloch (212) zu treten.

11. Batteriemodul (10), nach Anspruch 1,
ferner umfassend einen Anschluss (T1, T2), welcher an der Endabdeckung (230, 240) angeordnet ist und mit der Mehrzahl von Batteriezellen (100) elektrisch verbunden ist.

12. Batteriepack (20), umfassend das Batteriemodul (10) nach einem der Ansprüche 1 bis 11.

13. Fahrzeug (2), umfassend das Batteriemodul (10) nach einem der Ansprüche 1 bis 11.

## Revendications

1. Module de batterie (10) comprenant :
une pluralité de cellules de batterie (100) pouvant être chargées et déchargées ;
un boîtier de module (200) présentant un espace interne entouré par une pluralité de surfaces et une ouverture donnant sur l'espace interne, et configuré pour loger la pluralité de cellules de batterie (100) dans l'espace interne ; et
un couvercle d'extrémité (230, 240) configuré pour recouvrir l'ouverture du boîtier de module (200),
dans lequel le boîtier de module (200) comprend une partie ouverte (222) ménagée sur une première surface parmi la pluralité de surfaces et configurée pour être ouverte par un gaz généré à partir d'une cellule de batterie logée dans l'espace interne et évacuer le gaz dans une direction éloignée du couvercle d'extrémité (230, 240),
dans lequel le boîtier de module (200) comprend en outre un orifice de ventilation (224) configuré sous la forme d'une ligne ou d'une ligne en pointillé s'étendant le long du périmètre de la partie ouverte (222) et donnant sur l'espace interne.

2. Module de batterie (10) selon la revendication 1,
dans lequel le module de boîtier (200) comprend :
un cadre de boîtier (210) présentant l'espace interne et l'ouverture (230, 240) ; et
un couvercle de boîtier (220) configuré pour recouvrir une surface externe du cadre de boîtier (210).

3. Module de batterie (10) selon la revendication 2,
dans lequel le cadre de boîtier (210) présente un trou traversant (212) ménagé sur la première surface pour donner sur l'espace interne, et
dans lequel le couvercle de boîtier (220) comprend la partie ouverte (222) ménagée dans une section du couvercle de boîtier (220) faisant face au trou traversant (212).

4. Module de batterie (10) selon la revendication 3,
dans lequel le couvercle de boîtier (220) est configuré sous la forme d'une feuille et est configuré pour être fixé au cadre de boîtier (210) de façon à entourer au moins deux surfaces parmi la pluralité de surfaces.

5. Module de batterie (10) selon la revendication 3,
dans lequel le couvercle de boîtier (220) comprend :
une partie de recouvrement (220) comprenant la partie ouverte (222) et configurée pour recouvrir une première surface du cadre du boîtier (210) ;
une première partie de fixation (220b) s'étendant à partir d'une extrémité de la partie de recouvrement (22a) et fixée à une deuxième surface du cadre de boîtier adjacente à la première surface ; et
une deuxième partie de fixation s'étendant à partir de l'autre extrémité de la partie de recouvrement et fixée à une troisième surface du cadre de boîtier (210) adjacente à la première surface.

6. Module de batterie (10) selon la revendication 3,
dans lequel le couvercle de boîtier (220) est constitué d'un matériau flexible.

7. Module de batterie (10) selon la revendication 3,
dans lequel le couvercle de boîtier (220) présente une surface de fixation ayant une couche adhésive disposée sur celle-ci et est configuré pour être fixé à la surface externe du cadre de boîtier (210) à l'aide de la surface de fixation.

8. Module de batterie (10) selon la revendication 3,
dans lequel la partie ouverte (222) comprend :
une partie conductrice (222a) configurée pour être séparée du couvercle de boîtier (220) sous l'effet de la pression du gaz et ouvrir le trou traversant (212) ; et
un support (222b) ayant une extrémité reliée à la partie conductrice (222a) et l'autre extrémité reliée à une partie du couvercle de boîtier (220) pour soutenir la partie principale (222a) de sorte que la partie principale (222a), lorsqu'elle est séparée du couvercle de boîtier (220), ne s'écarte pas de sa position dans une plage prédéterminée.

9. Module de batterie (10) selon la revendication 8,
dans lequel la partie conductrice (222a) est configurée pour être divisée en deux parties ou plus sous l'effet de la pression du gaz.

10. Module de batterie (10) selon la revendication 3,
dans lequel le cadre de boîtier (210) comprend en outre une poutre de blocage (214) disposée à l'intérieur du trou traversant (212) et configurée pour empêcher la partie ouverte (222) d'entrer dans le trou traversant (212).

11. Module de batterie (10) selon la revendication 1,
comprenant en outre une borne (T1, T2) disposée sur le couvercle d'extrémité (230, 240) et connectée électriquement à la pluralité de cellules de batterie (100).

12. Bloc-batterie (20) comprenant le module de batterie (10) selon l'une quelconque des revendications 1 à 11.

13. Véhicule (2) comprenant le module de batterie (10) selon l'une quelconque des revendications 1 à 11.
